# EUROPEAN PATENT APPLICATION

(11) **EP 0 732 366 A2**
(43) Date of publication of application: **18.09.1996**
(21) Application number: 96301448.5
(22) Date of filing: 04.03.1996
(51) Int. Cl.: C08L 71/12, C08L 81/02, C08L 83/04

(54) **Flame retarded compositions of poly(phenylene ether and (arylene sulfide) resins**

(30) Priority: 17.03.1995 US 405636
(71) Applicant: GENERAL ELECTRIC COMPANY, Schenectady, NY 12345 (US)
(72) Inventor: Brown, Sterling Bruce, Schenectady, New York 12309 (US); Hwang, Chorng-Fure Robin, Cary, North Carolina 27513 (US); Rice, Steven Thomas, Scotia, New York 12302 (US); Scobbo, James Joseph, Jr., Slingerlands, New York 12159 (US); Yates, John Bennie, Glenmont, New York 12077 (US)
(74) Representative: Szary, Anne Catherine

(57) **Abstract**

Non-halogen flame retarded compositions are provided which comprise a compatibilizing poly(phenylene ether) resin, a poly(arylene sulfide) resin and a siloxane copolymer resin. The compositions can further comprise reinforcing fillers, lubricants, metal salts and other additives to provide compositions with enhanced physical properties. Articles molded from these compositions are useful in the electrical connector industry.

## Description

### BACKGROUND OF THE INVENTION

### Field of the Invention

This invention relates to blends of poly(phenylene ether) and poly(arylene sulfide) resins which exhibit enhanced properties such as flame retardancy and ductility.

### Brief Description of the Related Art

Blends of poly(phenylene ether) resins and poly(arylene sulfide) resins are generally known, but such blends are typically brittle and have poor chemical resistance in the absence of compatibilization between the two materials. Accordingly, there have been numerous methods developed for providing compatibilization between the two resins. The methods generally involve functionalizing the poly(phenylene ether) resin, the poly(arylene sulfide) resin, or both presumably in order to make copolymers between the two resins. The copolymers then serve as compatibilizers for the remaining poly(phenylene ether) resin and poly(arylene sulfide) resin. Examples of various compatibilized blends of poly(phenylene ether) resins and poly(arylene sulfide) resins can be found in U.S. Patent Nos. 5,290,881, 5,122,578, 5,292,789, and 4,528,346 as well as EP-341422-A, EP-368413-A, EP-491884-A, JP 03121159-A, and JP 04213357-A; all of which are incorporated herein by reference.

Although poly(phenylene ether) resins and poly(arylene sulfide) resins individually have low flammabilities, the flame characteristics of blends of the two are unacceptable for use in many electronic connector applications which require very stringent flame retardancy, especially in very thin wall sections. Improved flame retardant compositions of blends of poly(phenylene ether) resins and poly(phenylene sulfide) resins utilizing flame retarding agents of halogen or phosphorus-containing compounds have been disclosed in JP 03265661-A. However, halogen and phosphorus-containing flame retardants are undesirable for many of these same applications due to the toxic and corrosive fumes that can be emitted when the compositions are ignited.

Accordingly, there is a need to provide compositions of poly(phenylene ether) resins and poly(arylene sulfide) resins which demonstrate enhanced properties such as flame retardancy, chemical resistance and ductility and which do not contain halogen or phosphorous flame retardants.

### SUMMARY OF THE INVENTION

The needs discussed above have been generally satisfied by the discovery of an improved thermoplastic composition which comprises:
a) a compatibilizing poly(phenylene ether) resin;
b) a poly(arylene sulfide) resin; and
c) a siloxane copolymer resin.

In preferred embodiments, the compositions may additionally comprise impact modifiers, fillers, and metal salts to further enhance the overall properties of the final composition. The description which follows will provide additional details regarding this invention.

### DETAILED DESCRIPTION OF THE INVENTION

The poly(phenylene ether) resins (hereinafter known as "PPE") employed in the present invention are known polymers comprising a plurality of structural units of the formula (I): 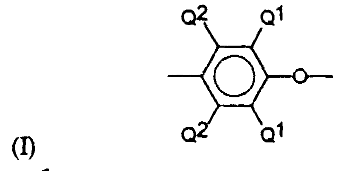 wherein each Q¹ is independently halogen, primary or secondary lower alkyl (i.e., alkyl containing up to about 7 carbon atoms), phenyl, haloalkyl, aminoalkyl, hydrocarbonoxy, or halohydrocarbonoxy wherein at least two carbon atoms separate the halogen and oxygen atoms; and each Q² is independently hydrogen, halogen, primary or secondary lower alkyl, phenyl, haloalkyl, hydrocarbonoxy or halohydrocarbonoxy as defined for Q¹. Most often, each Q¹ is alkyl or phenyl, especially C₁₋₄ alkyl, and each Q² is hydrogen.

Both homopolymer and copolymer PPE are included. The preferred homopolymers are those containing 2,6-dimethyl-1,4-phenylene ether units. Suitable copolymers include random copolymers containing, for example, such units in combination with 2,3,6-trimethyl-1,4-phenylene ether units. Also included are PPE containing moieties prepared by grafting vinyl monomers or polymers such as polystyrenes and elastomers, as well as coupled PPE in which coupling agents such as low molecular weight polycarbonates, quinones, heterocycles and formals undergo reaction in known manner with the hydroxy groups of two PPE chains to produce a higher molecular weight polymer.

The PPE generally have a number average molecular weight within the range of about 3,000-40,000 and a weight average molecular weight within the range of about 20,000-80,000, as determined by gel permeation chromatography. Its intrinsic viscosity is most often in the range of about 0.15-0.6 dl. /g., as measured in chloroform at 25°C.

The PPE are typically prepared by the oxidative coupling of at least one monohydroxyaromatic compound such as 2,6-xylenol or 2,3,6-trimethylphenol. Catalyst systems are generally employed for such coupling they typically contain at least one heavy metal compound such as a copper, manganese or cobalt compound, usually in combination with various other materials.

Particularly useful PPE for many purposes are those which comprise molecules having at least one aminoalkyl-containing end group. The aminoalkyl radical is typically located in an ortho position to the hydroxy group. Products containing such end groups may be obtained by incorporating an appropriate primary or secondary monoamine such as di-n-butylamine or dimethylamine as one of the constituents of the oxidative coupling reaction mixture. Also frequently present are 4-hydroxybiphenyl end groups, typically obtained from reaction mixtures in which a by-product diphenoquinone is present, especially in a copper-halide-secondary or tertiary amine system. A substantial proportion of the polymer molecules, typically constituting as much as about 90% by weight of the polymer, may contain at least one of said aminoalkyl-containing and 4-hydroxybiphenyl end groups.

It will be apparent to those skilled in the art from the foregoing that the PPE contemplated for use in the present invention include all those presently known, irrespective of variations in structural units or ancillary chemical features.

For one embodiment of the present invention, it is essential for at least some of the PPE to contain at least one reactive functional group, which may be present on a polymer endgroup or along the backbone of the polymer chain.

One type of useful reactive functional group is epoxy. A useful method for preparing an appropriate epoxy-type compatibilizing PPE involves reacting PPE with various epoxy chlorotriazine compounds in a non-reactive solvent for PPE. The capped PPE may be isolated by conventional techniques, such as precipitation with a non-solvent. Nonlimiting examples of these compounds include 2-chloro-4,6-diglycidoxy-1,3,5-triazine; 2-chloro-4-(n-butoxy)-6-glycidoxy-1,3,5-triazine; and 2-chloro-4-(2,4,6-tdmethylphenoxy)-6-glycidoxy-1,3,5-tdazine, also known as mesityl glycidyl chlorocyanurate (MGCC.). Methods to prepare these compounds and functionalized PPE resins can be found in U.S. Patent Nos. 4,895,945; 5,041,504; 5,089,566; 5,096,979, and 5,132,373 all of which are incorporated herein by reference.

Another PPE useful for the present invention is orthoester functional PPE. The term "ortho ester" is meant a compound in which one carbon atom is attached to another by a direct carbon-carbon bond, and to three further carbon atoms through oxygen. Such compounds can be considered to be esters of the hypothetical orthoacids R-C(OH)₃, wherein R is an organic radical. The existence of such orthoacids is for the most part unknown, since they immediately dehydrate to conventional carboxylic acids. However, esters of such acids are known and the compositions of this invention include certain polymer substituted esters of this type.

The orthoester functional PPE preferably contain orthoester moieties represented by the formula (II): 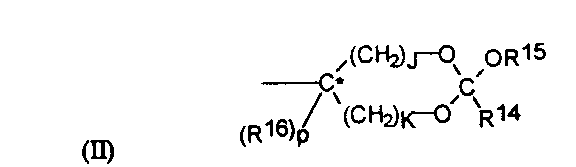 where R¹⁵ is a C₁₋₄ primary or secondary alkyl radical or is an alkylene radical forming a second 5- or 6-membered ring with C*, and R¹⁴ is a C₁₋₄ primary or secondary alkyl or C₆₋₁₀ aromatic radical, or R¹⁴ and R¹⁵ together with the atoms connecting them form a 5-, 6- or 7-membered ring;
R¹⁶ is hydrogen or C₁₋₄ primary or secondary alkyl;
K is 0 or 1;
J is from 1 or 2; and
p is 0 when R¹⁵ and C^{*} form a ring and is otherwise 1.

The R¹⁵ radical may be a C₁₋₄ primary or secondary alkyl radical such as methyl, ethyl, n-propyl, isopropyl, n-butyl, isobutyl or secondary butyl. Primary radicals and especially the methyl radical are generally preferred.

It is also possible for R¹⁵ to form a second 5- or 6-membered ring with other portions of the molecule. For this purpose, one of the carbon atoms in the orthoester ring is designated C* to indicate its role as part of said second ring.

The R¹⁴ value may be a C₁₋₄ primary or secondary alkyl radical as defined above for R¹⁵ or a C₆₋₁₀ aromatic (preferably aromatic hydrocarbon) radical. Finally, it is possible for R¹⁴ and R¹⁵ together to form a 5-, 6- or 7-membered ring with the atoms connecting them. Thus, the invention includes certain spiro orthoester-functionalized PPE.

The R¹⁶ radical may be hydrogen or an alkyl radical similar to R¹⁴ and R¹⁵. It is preferably hydrogen.

The values of J and K depend on whether the cyclic orthoester moiety is a 5-membered or 6-membered ring. In general, 5-membered rings are preferred; that is, K is 0 and J is 1. However, the invention also includes compositions in which a 6-membered ring is present, which requires either that J and K both be 1 or that K be 0 and J be 2.

The value of the subscript p also depends on the cyclic structure of the orthoester moiety. If C* is part of a ring structure with R¹⁵, all four valences thereof are satisfied and p will be 0. If this is not the case, p will be 1.

The following is an illustrative orthoester moiety Q(III) which may be present in the orthoester functional PPE: 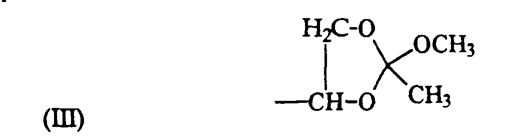 and which may also be referred to as a 4-(2-methoxy-2-methyl-1,3-dioxolanyl) radical and is usually preferred. Intermediates for preparation of such compounds include 4-hydroxymethyl-2- methoxy-2-methyl-1,3-dioxolane, which is obtainable by the reaction of glycerol and methyl orthoacetate. An improved method for the preparation of this and structurally related compounds in substantially pure form and the products thus obtained are disclosed in U.S. Patent 5,231,197, which is incorporated herein by reference.

The PPE having orthoester functional moieties is preferably prepared by melt extrusion of PPE with at least one graftable ethylenically unsaturated orthoester monomer. The functional orthoester monomer may be represented by the general formula (IV): 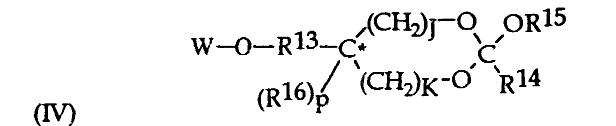 wherein the R¹⁴, R¹⁵, R¹⁶, Z, J, K, p and C* are as previously defined, R¹³ is a C₁₋₆ alkylene radical and W is a graftable unsaturated group represented by the following formula (V) 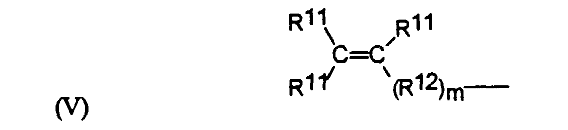 wherein each R¹¹ may independently be hydrogen, or a C₁₋₈ radical, or substituted derivatives thereof; or an aryl radical, or substituted derivative thereof. Each R¹¹ can also be other groups, provided that the group is inert to the orthoester. The value of m may be 1 or greater. R¹² can be one of the following formulae (VI):

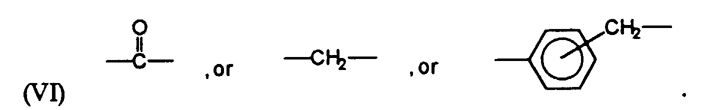

Illustrative examples of monomers which may be employed in the present invention include 4-acryloyloxymethyl-2-methoxy-2-methyl-1,3-dioxolane, 4-methacryloyloxymethyl-2-methoxy-2-methyl-1,3-dioxolane, 4-acryloyloxymethyl-2-methoxy-2-phenyl-1,3-dioxolane and the isomeric mixture of 4-(2-methoxy-2-methyl-1,3-dioxolanyl)methyl vinylbenzyl ethers. Methods for the preparation of these materials and their reaction with PPE can be found in U.S. Patent Nos. 5,171,866, 5,153,290 and 5,212,255, which are incorporated herein by reference.

Preferably the vinyl functional orthoester monomer is of the formula (VII):

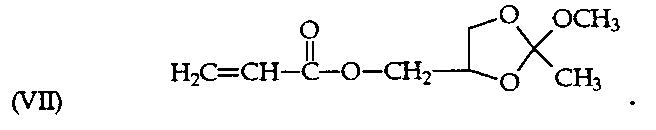

Another preferred vinyl functional orthoester monomer is represented by the formula (VIII):

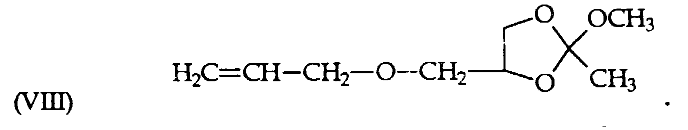

It is sometimes advantageous to use an initiator in the preparation of the functionalized PPE with the olefinic compound. Suitable initiators for use in the current invention include free radical initiators generally known in the art. Specific initiators include various peroxides and hydroperoxides. Specific examples include benzoyl peroxide, dicumyl peroxide, 2,5-dimethyl-2,5-di(t-butylperoxy)hexyne-3 and cumene peroxide, with 2,5,-dimethyl-2,5-di(t-butylperoxy)hexyne-3 being preferred. When it is used, the amount of initiator used can vary from about 0.05 weight percent to about 0.5 weight percent relative to the weight of the PPE.

Ortho ester derivatives of chlorotriazine compounds, as previously noted for epoxy groups, are also useful including 2-chloro-4-(2-methoxy-2-methyl-1,3-dioxolanyl)methoxy-6-phenoxy-1,3,5-triazine, for example. References to prepare appropriate triazine compounds can be found in U.S. Patent 5,132,373, which is incorporated herein by reference.

The amount of the above mentioned functionalizing agent that is required to appropriately functionalize the PPE is that which is sufficient to improve the compatibility between the various components in the composition. An effective amount, based on the amount of the PPE, is generally up to about 8% by weight, and is preferably from about 0.05% to about 4% by weight In the most preferred embodiments, the amount of the functionalizing agent is in the range from about 0.1% to about 3% by weight based on the amount of the PPE.

It is also sometimes advantageous to employ at least one lubricant which is substantially inert to the functionalizing agent and other ingredients in the preparation of a functionalized PPE. The presence of the lubricant decreases the required melt processing temperature to produce the functionalized PPE, as well as the compatibilized blends prepared therefrom. As a result, gel formation is minimized.

Suitable lubricants will be apparent to those skilled in the art in general, they are solids with high lubricity or relatively low melting solids or oils. Examples include poly-tetrafluoroethylene, fatty acid amides as disclosed and claimed in copending, commonly owned application Ser. No. 07/815211 (abandoned), aluminum alkylphosphonates as disclosed and claimed in copending, commonly owned application Ser. No. 07/816629, and hydrogenated poly(α-olefins) as disclosed and claimed in copending, commonly owned application Ser No. 07/816430 (abandoned) and commonly owned U.S. Patent Nos. 5,214,099 and 5,281,667, which are incorporated herein by reference.

The hydrogenated poly(α-olefins) are often preferred. They may be obtained by the catalytic polymerization of α-olefins followed by hydrogenation to remove residual unsaturation. The catalysts which may be employed in their preparation include cationic and metathetic catalysts. Methods for preparing hydrogenated poly(α-olefins) are disclosed, for example, in U.S. Patent Nos. 4,225,739, 4,282,392, 4,311,864, 4,319,065, 4,334,113 and 4,409,415, all of which are incorporated herein by reference. The products comprise polymers of various molecular weights, including oligomers.

The most preferred hydrogenated poly(α-olefins) are those having kinematic viscosities of about 2-20 centistokes and especially 8-12 centistokes at 100°C., as determined by ASTM procedure D445. They are commercially available from such companies as Henkel Corporation under the tradename EMERY fluids.

The hydrogenated poly(α-olefins) are generally used in a lubricating amount The lubricating amount, based on the weight of the PPE, is generally in the range of about 1% to about 5% by weight and preferably about 2% to about 4% by weight.

The poly(arylene sulfide) resins (referred to hereinafter as "PPS") used in the present invention are derived from the known polymers containing arylene groups separated by sulfur atoms. The preferred poly(phenylene sulfide) resins include various poly(p-phenylene sulfide)s, for example, poly(p-phenylene sulfide) and substituted poly(phenylene sulfide)s. Typical PPS polymers comprise at least 70 molar %, preferably at least 90 molar %, of recurring units of the following structural formula (IX): 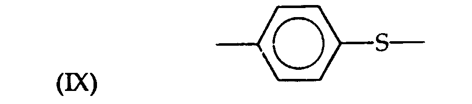 When the amount of the recurring units of formula (I) is less than 70 molar %, the heat resistance may be is insufficient.

The remaining 30 molar %, and preferably 10 molar % or less, of the recurring units of PPS can be those of the following structural formulae (X): 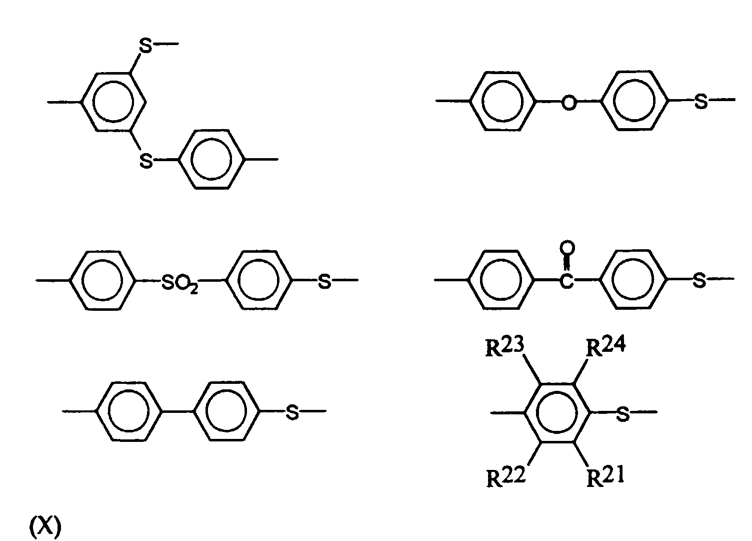 wherein R²¹, R²², R²³ and R²⁴ are independently selected from the group consisting of hydrogen, halogen, alkyl, phenyl, alkoxy, aryloxy, nitro, amino and carboxy groups.

The PPS of the present invention may be linear, branched or cured polymers or mixtures of the same. Linear PPS of relatively low molecular weight may be prepared by, for example, a process disclosed in the specification of U.S. Patent No. 3,354,129, which is incorporated herein by reference. Linear PPS having a relatively high molecular weight may be prepared by, for example, the process disclosed in the specification of U.S. Patent No. 3,919,177, which is incorporated herein by reference. Branched PPS may be prepared by the use of a branching agent, for example, 1,3,5-trichlorbenzene, which is disclosed in U.S. Patent 4,749,163, which is incorporated herein by reference. The degree of polymerization of the polymers prepared by the processes of U.S. Patent Nos. 3,354,129, 3,919,177 and 4,749,163 can be further increased by curing with heating the same in an oxygen atmosphere or in the presence of a crosslinking agent such as a peroxide after polymerization.

The PPS may be functionalized or unfunctionalized. If the PPS is functionalized, the functional groups include all functional groups that are capable of reacting with the functional groups on the PPE or with the PPE itself. Examples of appropriate functional groups may include, but are not limited to, amino, carboxylic acid, metal carboxylate, disulfide, thio, and metal thiolate groups.

One method for incorporation of functional groups into PPS can be found in U.S. Patent No. 4,769,424, which is incorporated herein by reference, which discloses incorporation of substituted thiophenols into halogen substituted PPS. Another method involves incorporation of chlorosubstituted aromatic compounds containing the desired functionality reacted with an alkali metal sulfide and chloroaromatic compounds. A third method involves reaction of PPS with a disulfide containing the desired functional groups, typically in the melt or in a suitable high boiling solvent such as chloronaphthalene.

Though the melt viscosity of PPS used in the present invention is not particularly limited so far as the blends which can be obtained, a melt viscosity of at least about 100 Poise is preferred from the viewpoint of the toughness of PPS per se and that of about 10,000 Poise or less is preferred from the viewpoint of the injection moldability.

The PPS in this invention may also be treated to remove unwanted contaminating ions by immersing the resin in deionized water or by treatment with an acid, typically hydrochloric acid, sulfuric acid, phosphoric acid or acetic acid as found in Japanese Kokai Nos. 3,236,930-A, 1,774,562-A, 1,299,872-A and 3,236,931-A, all of which are incorporated herein by reference. For some product applications, it is preferred to have a very low impurity level in the PPS. The impurity level is generally represented as the percent by weight ash remaining after burning a PPS sample. Typically ash contents of the PPS of less than about 1% by weight are desirable, with ash numbers less than about 0.5% by weight preferred and ash numbers less than about 0.1% by weight most preferred.

The compositions of the present invention also comprise at least one siloxane copolymer resin. Examples of appropriate siloxane copolymer resins include those comprising the formula (XI): 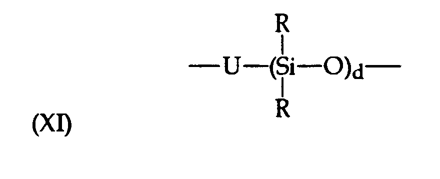 wherein U is a polymer selected from the group consisting of polyimides, polyetherimides, polycarbonates, poly(phenylene ether)s, polyesters, copolyesters, polyamides, polyolefins, polyurethanes, polyacrylates and the like; each R is a C₁-C₁₄ monovalent hydrocarbon radical, a substituted C₁-C₁₄ monovalent hydrocarbon radical, a C₆-C₂₀ aromatic radical, or a mixture of the foregoing, and d is an integer from 1 to about 200 or less.

The polyetherimide siloxane copolymer resins which are useful in the present blend compositions preferably contain repeating units of the formula (XII): 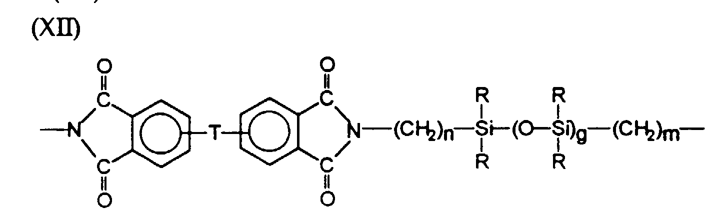 and of the formula (XIII) 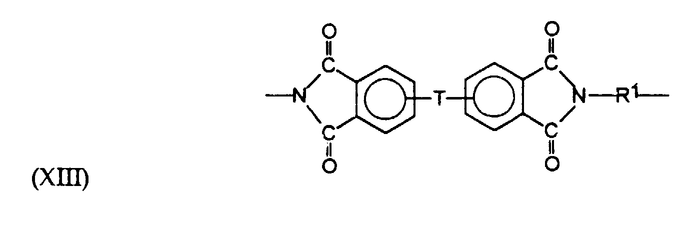 wherein T is - O - or a group of the formula -O-Z-O- wherein the divalent bonds of the -O- or the -O-Z-O- group are in the 3,3', 4,3', or the 4,4' positions; Z is a divalent radical selected from the group consisting of formulae (XIV): 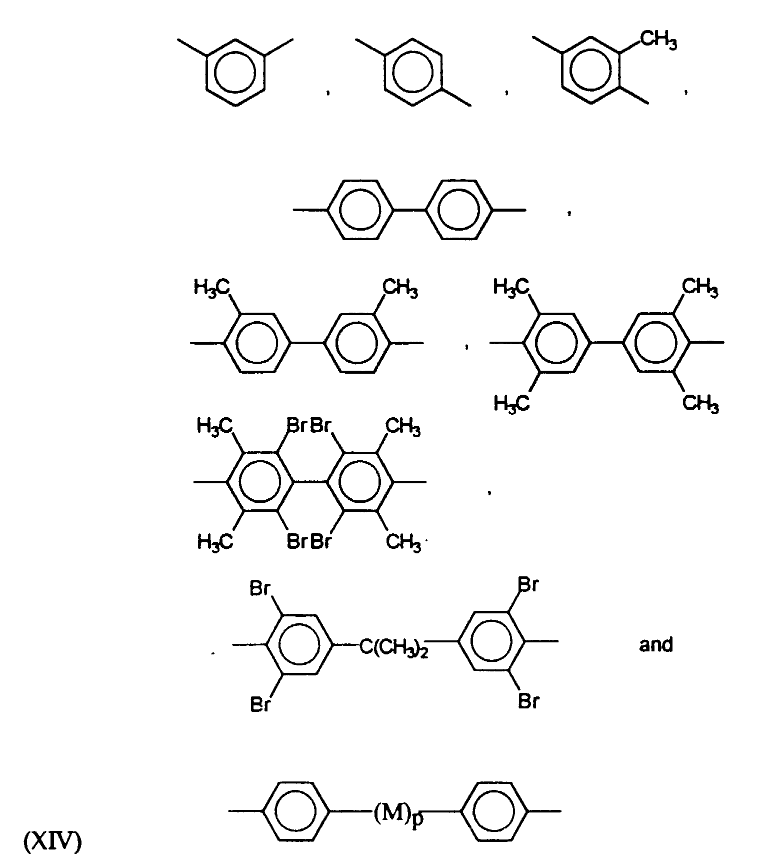 wherein M is a member selected from the group consisting of divalent radicals of formulae (XV): 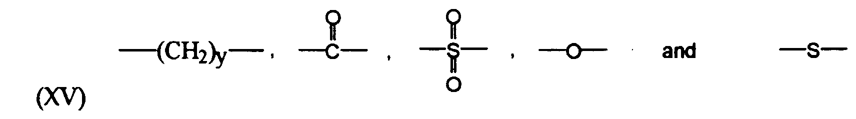 wherein y is an integer from 1 to about 5, and p is 0 or 1; n and m independently are integers from 1 to about 10; g is an integer from 1 to about 40; R is a C₁-C₁₄ monovalent hydrocarbon radical, a substituted C₁-C₁₄ monovalent hydrocarbon radical, a C₆-C₂₀ aromatic radical, or a mixture of the foregoing; and R¹ is a divalent organic radical selected from the group consisting of (a) aromatic hydrocarbon radicals having from 6 to about 20 carbon atoms and halogenated derivatives thereof, (b) alkylene radicals having from 2 to about 20 carbon atoms, (c) cycloalkylene radicals having from 3 to about 20 carbon atoms, and (d) divalent radicals of the general formula (XVI) 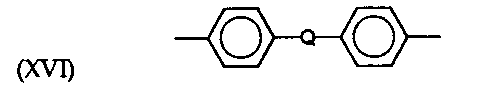 where Q is a member selected from the group consisting of formulae (XVII): (XVII) 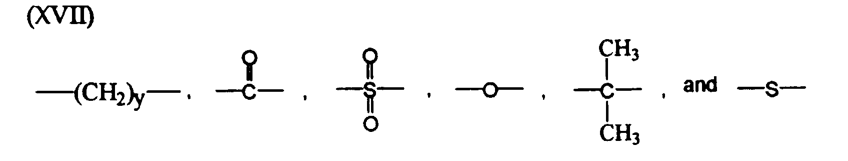 and y is as described above. In a preferred embodiment of formula (XII), each R is a methyl group, g is 10, n and m are each three, and the siloxane is about 35% by weight of the polyetherimide-siloxane copolymer. Suitable polyetherimide-siloxane copolymers and their methods of preparation are disclosed in U.S. Patent Nos. 4,690,997, 4,808,686 and 4,816,527, all of which are incorporated herein by reference.

Another useful class of siloxane copolymers is the siloxane-polycarbonate block copolymer resins. In general, these siloxane copolymers comprise a class of thermoplastic elastomers which exhibit low temperature ductility and are self-extinguishing. Such copolymers can be represented by the average formula (XVIII): 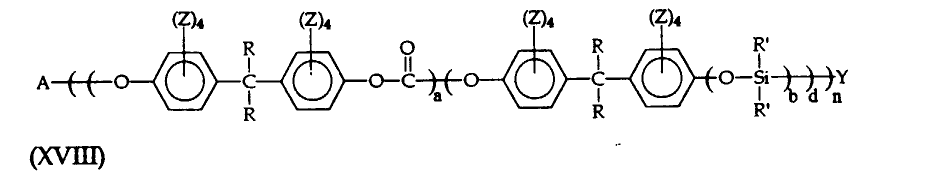 wherein n is at least 1, and preferably n is an integer equal to from 1 to about 1000, a is equal to from 1 to about 200; and b is from about 1 to 100 and, preferably, has an average value of from about 15 to about 90, while the ratio of a to b can vary from about 0.05 to about 3, and when b has an average value of from about 15 to about 90, the ratio of a to b is preferably from about 0.067 to about 0.45; d is 1 or more; Y is a member of the formula (XIX): 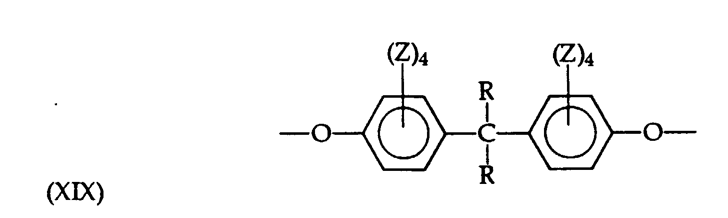 wherein A is a member selected from the class of hydrogen and the formula (XX): 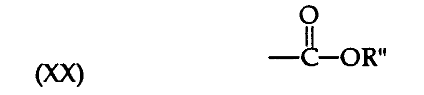 and wherein R is a member selected from the class of hydrogen, monovalent hydrocarbon radicals and halogenated monovalent hydrocarbon radicals, R' is a member selected from the class of monovalent hydrocarbon radicals and cyanoalkyl radicals, R" is a member selected from the class consisting of monovalent hydrocarbon radicals and halogenated hydrocarbon radicals, and Z is a member selected from the class of hydrogen, lower alkyl radicals and halogen radicals and mixtures thereof.

Included within the radicals represented by R of Formula (XVIII) are aryl radicals and halogenated aryl radicals such as phenyl, chlorophenyl, xylyl, tolyl, etc.; aralkyl radicals such as phenylethyl, benzyl, etc., aliphatic, haloaliphatic and cycloaliphatic radicals such as alkyl, alkenyl, cycloalkyl, haloalkyl including methyl, ethyl, propyl, chlorobutyl, cyclohexyl, etc.; R can be all the same radical or any two or more of the aforementioned radicals, while R is preferably methyl, R' includes all radicals included by R above except hydrogen, where R' can be all the same radical or any two or more of the aforementioned R radicals except hydrogen, and R' is preferably methyl. R' also includes, in addition to all the radicals included by R, except hydrogen, cyanoalkyl radicals such as cyanoethyl, cyanobutyl, etc., radicals. Radicals that are included within the definition of Z of Formula (XIII) are hydrogen, methyl, ethyl, propyl, chloro, bromo, iodo, etc. and combinations thereof, and Z is preferably hydrogen.

The copolymers useful in the present invention can be further described as comprising recurring copolymeric units of a polydiorganosiloxane joined by substituted aryloxy-silicon linkages to a polyester or dihydric phenol and a precursor of carbonic acid, where each of said recurring copolymeric units comprises by average weight from about 10 to about 75% of the polydiorganosiloxane, and preferably from about 40 to 70% by weight The preparation of materials of this nature is by conventional methods, such as, for example those described in U.S. Pat Nos. 3,189,662 and 4,879,346, which are incorporated herein by reference.

Illustrative of the siloxane-polycarbonate block copolymer resins is LR-3320 obtained from GE Plastics. This material has a specific gravity of 1.12, a tensile strength of about 2500 to about 3900 psi, an elongation of about 230 to about 430% and a brittleness temperature below -76°F.

Another example of a siloxane-polycarbonate block copolymer resin is GE Plastics LR-5630 which has a specific gravity of 1.07, a tensile strength of about 2200 to about 2500 psi, an elongation of about 500 to about 700% and a brittleness temperature below -76°F.

Other useful siloxane copolymers are the siloxane-poly(phenylene ether) block copolymer resins. In general, these siloxane copolymers comprise a class of thermoplastic elastomers which exhibit low temperature ductility and are self-extinguishing. Examples of appropriate siloxane-poly(phenylene ether) block copolymer resins include those comprising formula (XXI): 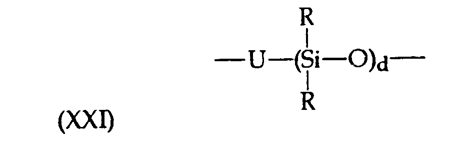 wherein U is a poly(phenylene ether) resin and R and d are as previously described for Formula (XI).

The polysiloxane-poly(phenylene ether) block copolymer resins are *per se* well known in the art and numerous methods have been used to prepare various architectures, as well as utilizing various linkages between U and the polyorganosiloxane portion. Polysiloxane-poly(phenylene ether) block copolymer resins have been prepared, for example, by the reaction between hydroxy terminated poly(phenylene ether) segments and amine terminated polyorganosiloxane segments as demonstrated in U.S. Patent 3,668,273, which is incorporated herein by reference. Another illustrative polysiloxane-poly(phenylene ether) block copolymer resin has been prepared by effecting the reaction between an anhydride functionalized poly(phenylene ether) resin and an amine containing polyorganosiloxane resin, as illustrated by U.S. Patent 4,814,392, which is incorporated herein by reference. A third method for preparing useful polysiloxane-poly(phenylene ether) block copolymer resins comprises copolymerizing a phenol-siloxane macromer as a comonomer into the oxidative coupling reaction used to manufacture PPE. This method is described in U.S. Patent 5,204,438, which is incorporated herein by reference. Useful block architectures include, for example, linear, branched, and star shaped polymers and also include both diblock and multiblock structures.

Preferred polysiloxane-poly(phenylene ether) block copolymer resins include ABA triblock structures wherein the A blocks are poly(phenylene ether) segments with an intrinsic viscosity of about 0.41 dl/gm measured in chloroform at 25°C. and the B block is a polydimethylsiloxane of about 30 siloxane repeat units. The overall siloxane content is about 20% by weight of the weight of the polysiloxane-poly(phenylene ether) block copolymer resin.

The invention also includes compositions containing elastomeric impact modifiers compatible with either or both the PPE and the PPS.

Impact modifiers for PPE and PPS are typically derived from one or more monomers selected from the group consisting of olefins, vinyl aromatic monomers, acrylic and alkylacrylic acids and their ester derivatives as well as conjugated dienes. Especially preferred impact modifiers are the rubbery high molecular weight materials including natural and synthetic polymeric materials showing elasticity at room temperature. They include both homopolymers and copolymers, including random, block, radial block, graft and core-shell copolymers as well as combinations thereof. The impact modifier may be functionalized or may not be functionalized.

Olefin polymers and copolymers employable in the invention include low density polyethylene (LDPE), high density polyethylene (HDPE), linear low density polyethylene (LLDPE), isotactic polypropylene, poly(l-butene), poly(4-methyl-1-pentene), and the like. Additional olefin copolymers include copolymers of one or more α-olefins, particularly ethylene, with copolymerizable monomers including, for example, vinyl acetate, acrylic acids and alkylacrylic acids as well as the ester derivatives thereof including, for example, ethyl acrylate, methacrylic acid, methyl methacrylate and the like. Also suitable are the ionomer resins, which may be wholly or partially neutralized with metal ions.

One type of olefinic elastomer useful in the present invention are copolymers of an α-olefin with a glycidyl ester of an α,β-unsaturated carboxylic acid. α-Olefin as used herein means ethylene, propylene, butene-1, etc. Among them, ethylene is preferred. The glycidyl esters of the α,β-unsaturated acids are compounds of the general formula (XXII): 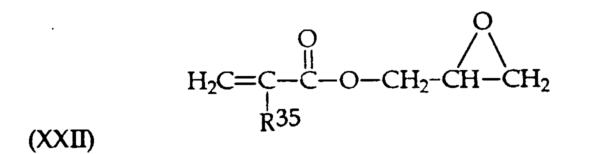 wherein R³⁵ represents a hydrogen atom or a lower alkyl group. Examples of the glycidyl esters of α,β-unsaturated acids include glycidyl acrylate, glycidyl methacrylate and glycidyl ethacrylate. The epoxy functional olefinic elastomer is preferably an olefinic copolymer containing from about 60% to about 99.5% by weight of an α-olefin and from about 0.5% to about 40% by weight of a glycidyl ester of an α,β-unsaturated carboxylic acid, preferably from about 3% to about 30% by weight; based on the weight of the elastomer's composition. When this amount is less than about 0.5% by weight, no intended effects can be obtained and when it exceeds about 40% by weight, gelation occurs during melt-blending resulting in degradation of the extrusion stability, moldability and mechanical properties of the product Suitable epoxy functional α-olefin elastomers include: ethylene-glycidyl acrylate copolymers, ethylene-glycidyl methacrylate copolymers, ethylene-glycidyl methacrylate-vinyl acetate terpolymers, ethylene-glycidyl methacrylate-methyl acrylate terpolymers, ethylene-ethyl acrylate-glycidyl methacrylate terpolymers. The preferred epoxy functional elastomers are available from Sumitomo Chemical Co. under the trademarks IGETABOND and BONDFAST and from Elf Atochem under the trademark LOTADER.

A particularly useful class of impact modifers are those derived from the vinyl aromatic monomers. These include AB and ABA type block, tapered and radial block copolymers and vinyl aromatic-conjugated diene core-shell graft copolymers.

An especially preferred subclass of vinyl aromatic monomer-derived resins is the block copolymers comprising monoalkenyl arene (usually styrene) blocks and conjugated diene (e.g., butadiene or isoprene) or olefin (e.g., ethylene-propylene, ethylene-butylene) blocks and represented as AB and ABA block copolymers. The conjugated diene blocks may be partially or entirely hydrogenated, whereupon the properties are similar to the olefin block copolymers.

Suitable AB type block copolymers are disclosed in, for example, U.S. Patent Nos. 3,078,254, 3,402,159, 3,297,793, 3,265,765 and 3,594,452 and U.K Patent 1,264,741, all incorporated herein by reference. Examples of typical species of AB block copolymers include polystyrene-polybutadiene (SBR), polystyrene-poly(ethylenepropylene) (S-EP), polystyrene-polyisoprene and poly(α-methylstyrene)-polybutadiene. Such AB block copolymers are available commercially from a number of sources, including Phillips Petroleum under the trademark SOLPRENE, from the Shell Chemical Co. under the trademark KRATON, and from Kurary under the trademark SEPTON.

Additionally, ABA triblock copolymers and processes for their production as well as hydrogenation, if desired, are disclosed in U.S. Patent Nos. 3,149,182, 3,231,635, 3,462,162, 3,287,333, 3,595,942, 3,694,523 and 3,842,029, which are all incorporated herein by reference.

Examples of triblock copolymers include polystyrene-polybutadiene-polystyrene (SBS), polystyrene-polyisoprene-polystyrene (SIS), poly(α-methyl-styrene)-polybutadiene-poly(α-methylstyrene) and poly(α-methylstyrene)-polyisoprene-poly(α-methylstyrene). Particularly preferred triblock copolymers are available commercially from Shell Chemical Co. under the trademarks CARIFLEX and KRATON.

Another class of useful impact modifiers is derived from conjugated dienes. While many copolymers containing conjugated dienes have been discussed above, additional conjugated diene modifier resins include, for example, homopolymers and copolymers of one or more conjugated dienes including, for example, polybutadiene, butadienestyrene copolymers, isoprene-isobutylene copolymers, chlorobutadiene polymers, butadiene-acrylonitrile copolymers, polyisoprene, and the like. Ethylene-propylene-diene monomer rubbers (EPDM's) may also be used. They are typified as comprising predominantly ethylene units, a moderate amount of propylene units and up to about 20 mole percent of nonconjugated diene monomer units. They may also contain reactive groups such as acid, oxazoline, ortho-ester, epoxy, amine, or anhydride. Many EPDM's and processes for the production thereof are disclosed in U.S. Patent Nos. 2,933,480, 3,000,866, 3,407,158, 3,093,621 and 3,379,701, which are all incorporated herein by reference.

Other suitable impact modifiers are the core-shell type graft copolymers. In general, these have a predominantly conjugated diene rubbery core or a predominantly cross-linked acrylate rubbery core and one or more shells polymerized thereon and derived from monoalkylarene and/or acrylic monomers alone or, preferably, in combination with other vinyl monomers. The shells of these impact modifiers may also contain reactive groups, for example, acid, epoxy, oxazoline, ortho-ester, amine, or anhydride groups. The core-shell copolymers are widely available commercially in pellet and powder forms, for example, from Rohm and Haas Company as grades including EXL-3330, EXL-3691, EXL-2600, EXL-2607, EXL-2647, EXL-3386, and EXL-3607, and are described in U.S. Patent Nos. 3,808,180, 4,034,013, 4,096,202, 4,180,494 and 4,292,233.

Also useful are the core-shell copolymers wherein an interpenetrating network of the resins employed characterizes the interface between the core and shell. Especially preferred in this regard are the ASA type copolymers available from GE Plastics under the trademark GELOY, and described in U.S. Patent No. 3,944,631, which is incorporated herein by reference.

In addition, there may be employed the above-described polymers and copolymers having copolymerized therewith or grafted thereon monomers having functional groups and/or polar or active groups. Finally, other suitable impact modifiers include Thiokol rubber, polysulfide rubber, polyurethane rubber, polyether rubber (e.g., polypropylene oxide), epichlorohydrin rubber, thermoplastic polyester elastomers and thermoplastic (ether-ester) and (ester-amide) elastomers.

The proportion of impact modifier or other resinous material is subject to wide variation. The amount of impact modifier used is generally an amount sufficient to improve the ductility of the compositions. Impact modifiers such as diblock or triblock copolymers, when utilized, are usually present in an amount up to about 50 parts per 100 parts of PPE. The epoxy functional olefinic elastomers, when utilized as an impact modifier, are usually present in an amount up to about 50 parts per 100 parts of PPS. Other impact modifiers may also be present.

The polymer mixture according to the invention may also comprise a non-elastomeric metal salt having a melting temperature lower than the compounding temperature of the polymer mixture with the exception of metal salts of dihydrocarbyldithiophosphinic acid. It is of importance for the melting temperature of the metal salt to be lower than the compounding temperature of the polymer mixture; when the melting temperature is equal to or higher than the compounding temperature, the metal salt is less effective for improving the mechanical properties. The compounding temperature is the temperature at which the constituents of the polymer mixture according to the invention are mixed to a more or less homogeneous mass in the melted condition or a similar condition The compounding temperature generally is above about 285°C, usually between approximately 300° and 350°C.

Suitable metal salts are inorganic or organic salts, more preferably metal salts of organic acids. Suitable organic acids are saturated and unsaturated aliphatic carboxylic acids, aromatic carboxylic acids, aliphatic and aromatic sulphonic or phosphonic acids and salts of alkyl hydrogen sulphates. The organic part of the salts preferably has a molecular weight below about 500, more preferably below about 300.

Specific organic acids include, but are not restricted to: benzoic, palmitic, lauric, acetic, stearic, gluconic, as well as dodecyl benzene sulphonic acids.

Suitable metal salts may be taken from a broad range of metals provided that the salt has a melting temperature lower than the polymer mixture compounding temperature. Metals such as calcium, aluminum and zinc are preferred but this does not preclude metals such as sodium, lithium, potassium, barium, beryllium, magnesium, copper, cobalt, and iron. In particular, metal salts of stearic acid are preferred. The amount of metal salt, when utilized, is advantageously from about 0.01 weight percent to about 5 weight percent based on the total weight of the composition.

The addition of reinforcing fillers is also contemplated for the compositions of the present invention. Suitable reinforcing fillers are those which increase the rigidity of the blend composition. Amongst these, fibrous materials are preferred, in particular glass fibers made from low alkali E-glass, having a fiber diameter from about 8 µm to about 14 µ m. The length of the glass fibers in the finished molded part is typically, for example, from about 0.01 mm to about 0.5 mm. The glass fibers may be employed as rovings or as chopped or milled glass fibers, and may be provided with a suitable finish and an adhesion promoter or promoter system based on silanes. The amount of reinforcing fillers is advantageously from about 5 weight percent to about 60 weight percent, especially from about 10 weight percent to about 40 weight percent based on the total weight of the composition.

Other fibrous reinforcing materials, e.g. carbon fibers, potassium titanate single-crystal fibers, wollastonite, gypsum fibers, aluminum oxide fibers or asbestos may also be utilized. Non-fibrous fillers, e.g. glass beads, hollow glass beads, talcs, micas, chalks, quartzes and natural or calcined kaolins are further preferred fillers, as are combinations of these materials with glass fibers. Like the glass fibers, these latter fillers may be provided with a finish and/or an adhesion promoter or adhesion promoter system. The combination of a non-fibrous filler that also has a platey structure, e.g. talcs, micas and platey kaolins, with glass fibers is especially preferred for some applications to reduce the anisotropic properties of the final composition due to alignment of the glass fiber with the direction of the mold filling during processing. The amount of non-fibrous filler can range from 0% to about 50% by weight based on the total weight of the entire composition.

The compositions of the present invention may also contain at least one polymer of an alkenylaromatic compound. Suitable polymers of this type may be prepared by methods known in the art including bulk, suspension and emulsion polymerization. They generally contain at least about 25% by weight of structural units derived from an alkenylaromatic monomer of the formula (XIII) 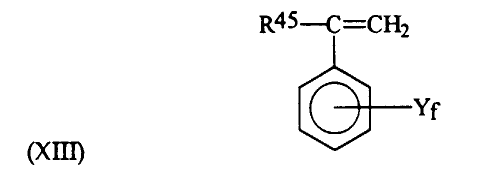 wherein R⁴⁵ is hydrogen, lower alkyl or halogen; Y is hydrogen, vinyl, halogen or lower alkyl; and f is from 0 to 5. These resins include homopolymers of styrene, chlorostyrene and vinyltoluene, random copolymers of styrene with one or more monomers illustrated by acrylonitrile, butadiene, α-methylstyrene, ethylvinylbenzene, divinylbenzene and maleic anhydride, and rubber-modified polystyrenes comprising blends and grafts, wherein the rubber is a polybutadiene or a rubbery copolymer of about 98-65% styrene and about 2-35% diene monomer. These rubber modified polystyrenes include high impact polystyrene (commonly referred to as HIPS). Non-elastomeric block copolymer compositions of styrene and butadiene can also be used that have linear block, radial block and tapered block copolymer architectures. They are commercially available from such companies as Fina Oil under the trademark FINACLEAR resins and from Phillips Engineering Resins under the trademark K-RESINS.

The alkenylaromatic compound when present is generally used in the range from about 1% to about 25% by weight and preferably from about 5% to about 15% by weight; based on the weight of the total composition.

The compositional ratios of the present invention, all of which are expressed as percentages by weight of the total composition, can range from a level from about 5% to about 95% by weight of PPE resin, about 5% to about 95% by weight of PPS, and about 0.1% to about 15% by weight of siloxane copolymer resin, and further comprise up to about 8% by weight of a functionalizing agent; 0% to about 20% by weight of epoxy functional elastomer, 0 to about 20% by weight of elastomeric block copolymer, 0% to about 25% by weight of alkenyl aromatic polymer and 0 to about 10% by weight of the metal salt.

The composition preferably comprises PPE at a level, expressed as percentages by weight of the total composition, from about 5% to about 95% by weight, more preferably between about 25% to about 40% by weight, and most preferably from about 30% to about 35% by weight. The composition preferably comprises the PPS at a level, expressed as percentages by weight of the total composition, from about 5% to about 95% by weight, more preferably from about 40% to about 65% by weight, and most preferably from about 50% to about 60% by weight. The composition preferably comprises the siloxane copolymer resin at a level, expressed as percentages by weight of the total composition, from about 0.1% to about 10% by weight, more preferably from about 0.1% to about 5% by weight, and most preferably from about 0.5% to about 2% by weight. The composition preferably comprises the functionalizing agent at a level, expressed as percentages by weight of the PPE, from about 0.1% to about 8% by weight, more preferably from about 0.25% to about 3% by weight, and most preferably from about 0.5% to about 1.5% by weight. When the epoxy functional elastomer is utilized as an impact modifier, either in addition to another epoxy compound or alone, it is preferably present at a level, expressed as percentages by weight of the total composition, of about 2% to about 18% by weight, more preferably from about 5% to about 15% by weight, and most preferably from about 7% to about 12% by weight. The composition preferably comprises the elastomeric block copolymer at a level, expressed as percentages by weight of the total composition, from about 2% to about 18% by weight, more preferably from about 3% to about 10% by weight, and most preferably from about 4% to about 7% by weight. The metal salt is preferably present at a level, expressed as percentages by weight of the total composition, from about 0.05% to about 5% by weight, more preferably present at a level from about 0.1% to about 1% by weight, and most preferably present at a level from about 0.1% to about 0.3% by weight. Preferably PPS and PPE are in a weight ratio of between about 75:25 and about 30:70, more preferably between about 70:30 and about 50:50, and most preferably between about 67:33 and about 62:38. Preferably PPE and the functionalizing compound are present in a weight ratio of between about 93:7 and about 99:1, more preferably between about 95:5 and about 99:1, and most preferably between about 96:4 and about 98:2. Preferably the epoxy functional elastomer and the elastomeric block copolymer are in the composition in a weight ratio of between about 15:2 and about 5:10, more preferably between about 12:3 and about 6:6, and most preferably between about 10:6 and about 7:5. Preferably the combined total weight percent, expressed as percentages by weight of the total composition, of epoxy functional elastomer and elastomeric block copolymer in the composition is between about 5% and about 21% by weight, more preferably between about 8% and about 16% by weight, and most preferably between about 10% and about 14% by weight. Typically, when reinforcing fillers are utilized the level of impact modifier is fairly low, generally under 5% by weight based on the total weight of the composition. Preferably the compositions are free of additional resin materials such as polyesters, polyimides, polyamides and polycarbonate resins. Determination of an exact ratio for a composition is, in part, determined by the intended ultimate end-use application of the composition and the necessary properties needed for the application.

The present compositions exhibit improvements in ductility and flame retardancy free of halogen and phosphorous flame retardants, two properties which are critical for many electronic part applications. The compositions further exhihit no flash characteristics and high chemical resistance. Other advantageous properties exhibited by the present compositions include low coefficient of thermal expansion, low moisture absorption, high heat distortion temperature and long term heat stability. Furthermore, the present compositions exhibit enhanced falling dart impact resistance and improved tensile elongation at break.

The compositions may contain or be free of conventional additives such as plasticizers, stabilizers, antioxidants, crystallization nucleants, lubricants, inhibitors, and mold release agents.

Various processes can be utilized to prepare the compositions of the present invention. A preferred process for preparing the orthoester functional PPE/PPS compositions involves combining PPE functionalization and subsequent compounding with the PPS and additives in a single melt compounding step. For example, PPE, graftable orthoester, radical initiator and lubricant can be fed to a screw extruder in which the temperature and mixing regime in the first few barrel segments are suitable to facilitate efficient grafting of orthoester functionality to the PPE. The PPS and additives (optionally in the form of a concentrate) may be fed to the same extruder at an appropriate down-stream feed port. The extruder optionally may be vacuum-vented at barrel segments before the polyarylene sulfide feed port or after the polyarylene sulfide feed port or at both locations. Optionally, a portion of the PPS, additives, or various combinations of the two may be throat fed with the PPE and orthoester monomer.

The compositions may also be made by a two step process which involves synthesizing the orthoester functional PPE in a separate reaction step, and then melt mixing (preferably by extrusion) the orthoester functional PPE with the polyarylene sulfide resin and any optional additives including impact modifiers.

A PPE to be functionalized preferably has an intrinsic viscosity from about 0.19 dl/g to about 0.80 dl/g (measured in chloroform at 25°C), and more preferably from about 0.25 dl/g to about 0.49 dl/g. The orthoester functionality incorporated into the PPE preferably ranges from about 0.4% to about 3% by weight on the PPE as measured by proton NMR spectroscopy.

### EXAMPLES

The compositions of Tables 1 through 6 were extruded on a Werner-Pfleiderer twin-screw extruder at a temperature of about 290-340° C with a vacuum of 10-20 inches Hg applied to the melt during compounding. The resultant compositions were molded using a van Dorn injection molding machine using a temperature set of about 300-320°C and a mold temperature of about 120-150°C. All the compositions were subjected to flammability testing in accordance with Underwriters Laboratory Bulletin 94 Procedures (UL94) and the average flame out time was measured. Samples of the compositions were also subjected to measurement of notched Izod impact strength according to ASTM D256 (employing a sample size of 2.5 inch by 0.5 inch by 0.125 inch), Dynatup (energy to fracture, falling dart test) strength according to ASTM D3763 (using 4 inch diameter by 0.125 inch disks), flexural modulus and flexural strength according to ASTM D790 (employing a sample size of 6 inch by 0.5 inch by 0.25 inch), heat deflection under a load of 264 psi according to ASTM D648 (employing a sample size of 6 inch by 0.5 inch by 0.25 inch) and tensile yield and tensile elongation at break according to ASTM D638.

The actual extrusion conditions employed may affect the physical properties of the resultant blend. In an embodiment of the present invention it is advantageous to premix the PPE with the functionalizing agent to form a functionalized PPE that serves as a compatibilizing PPE. The functionalized PPE can then be mixed with the remaining ingredients to form the final composition. By functionalizing the PPE before adding the PPS it is thought that reaction of the functionalizing agent with the PPS can be avoided until after the desired reaction between the functionalizing agent and the PPE can be achieved. Premixing the PPE with the functionalizing agent before mixing with the PPS also maximizes the utilization of the functionalizing agent to functionalize the PPE. In another embodiment, a single extruder that has at least two ports for introduction of ingredients is utilized. The PPE and the functionalizing agent are introduced into the throat of the extruder (first port) and compounded. Simultaneously, additional ingredients are introduced into ports downstream of the first port and the compounding continued. Each portion of the extruder is preferably vacuum vented. Typical compounding temperatures are in the range of about 290°C to about 340° C.

The materials used in the following compositions were as follows: PPE is poly(2,6-dimethylphenylene ether) resin having an intrinsic viscosity of about 0.46 dl/gm measured in chloroform at 25°C, obtained from GE Plastics.

PPE-EP is an epoxy functionalized PPE prepared by reacting PPE with about 4 weight percent 2-chloro-4(2,4,6-Wmethylphenoxy)-6-glycidoxy-1,3,5-triazine (MGCC.).

PPE-OE is an ortho ester functionalized PPE prepared by extruding 2% by weight acrylate orthoester (VII) with PPE. The PPE-OE was dried at about 110°C prior to use.

PPS-1 is a linear PPS.

PPS-2 is a cured PPS.

PEI-SIL is a polyetherimide siloxane block copolymer obtained from GE Plastics and is about 35% by weight polysiloxane by weight based on the entire polymer.

SIL-PC is a siloxane-polycarbonate block copolymer resin obtained from GE Plastics and is about 43% by weight polysiloxane by weight based on the entire polymer.

PPE-SIL is a poly(phenylene ether)-siloxane block copolymer resin obtained from GE Plastics and is about 20% by weight polysiloxane by weight based on the entire polymer.

Glass fiber is G-type chopped glass fiber having an average length of 1/8 inch and an average diameter of 10µM. The glass fiber was obtained from Owens-Corning Co. and was grade 187A-AA.

BF-E is (polyethylene-co-12% glycidyl methacrylate) obtained under the trademark BONDFAST E from the Sumitomo Chemical Co., Ltd.

IM is a styrene-(ethylene-butylene)-styrene type impact modifier obtained from the Shell Chemical Co. under the trademark KRATON G1651.

ZSt. is zinc stearate obtained from Aldrich Chemical Co. and has a melting point of about 128-130°C.

Table 1 contains several illustrative examples of orthoester functionalized PPE (PPE-OE), two types of PPS, and a polyetherimide-siloxane copolymer (PEI-SIL) blends further comprising an impact modifier, glass fibers or both. Comparison of sample 2 to the control sample 1 illustrates that the burn time has been cut in half with the addition of the siloxane copolymer resin with the retention of the other physical properties. Sample 3 illustrates that ductility can be improved by the addition of an impact modifier with retention of excellent low burn times. Sample 4 illustrates that high modulus PPE/PPS samples can be made that still have burn times that are quite outstanding (less than 6 seconds). Samples 6 and 7 teach that cured PPS resins can also be utilized with outstanding results.

Table 2 contains compositions that parallel the samples in Table 1 except Table 2 is illustrative of epoxy functional PPE (PPE-EP), the same two types of PPS, and a polyetherimide-siloxane copolymer (PEI-SIL) further comprising an impact modifier, glass fibers or both. As shown by the data in Table 2, the PPE-EP can also be used to prepare flame resistant PPE/PPS compositions utilizing a siloxane copolymer resin.

The samples in Tables 3 and 4 further illustrate, in part, the wide compositional variations that are possible with the present components depending on the ultimate end-use application requirements. The samples in Table 3 utilize the ortho ester functionalized PPE (PPE-OE) and the samples in Table 4 illustrate an epoxy modified PPE (PPE-EP). The samples in these two tables utilize approximately a 10:1 weight to weight ratio of PPS to PPE and also demonstrate the use of a polyetherimide-siloxane copolymer (PEI-SIL).

Tables 5 and 6 contain illustrative samples utilizing a siloxane-polyphenylene ether block copolymer resin (PPE-SIL) or a siloxane-polycarbonate block copolymer resin (SIL-PC) as the siloxane copolymer resin with two different types of compatibilizing PPE (PPE-OE in Table 5 and PPE-EP in Table 6). The data in these tables illustrate high impact PPE/PPS compositions utilizing a styrenic-based elastomer and an epoxy modified polyolefin for impact improvement. Improved burn times are obtained with either of the siloxane copolymer resins with sigificant retention of the other physical properties.

Throughout all of the illustrative samples, enhancements in physical properties can be obtained with the addition of a siloxane copolymer resin to compatibilized PPE/PPS compositions. It should be noted that the examples are merely illustrative of the compositions of the invention and in no way are meant to limit the invention.

**Table 1**

| sample | 1 | 2 | 3 | 4 | 5 | 6 | 7 |
|---|---|---|---|---|---|---|---|
| PPS1 | 60 | 59 | 58 | 40 | 37 | 0 | 0 |
| PPS2 | 0 | 0 | 0 | 0 | 0 | 59 | 58 |
| PPE-OE | 40 | 39 | 34 | 28 | 25 | 39 | 34 |
| IM | 0 | 0 | 6 | 0 | 6 | 0 | 6 |
| Glass fiber | 0 | 0 | 0 | 30 | 30 | 0 | 0 |
| PEI-SIL | 0 | 2 | 2 | 2 | 2 | 2 | 2 |
| HDT | 241 | 246 | 236 | 371 | 359 | 298 | 258 |
| NI | 0.22 | 0.21 | 0.78 | 0.96 | 1.08 | 0.21 | 0.25 |
| Flex. Mod. | 435 | 430 | 380 | 1324 | 1136 | 440 | 382 |
| Flex. Str. | 15.8 | 15.2 | 14.6 | 21.8 | 21.8 | 12.6 | 12.5 |
| Ten. Str. | 9.3 | 9.7 | 8.8 | 17.5 | 16.8 | 7.0 | 5.7 |
| Ten. elg. | 7 | 7.4 | 9.7 | 4.2 | 4.4 | 5.5 | 5.3 |
| Burn time | 3.6 | 1.6 | 3.4 | 5.2 | burns | 1.5 | 3.5 |
| HDT in °F; NI in ft-lb/in; Flex. Mod. in Kpsi; Flex. Str. in Kpsi; Ten. Str. in Kpsi; Ten. Elg. in %; burn time in seconds. | | | | | | | |

**Table 2**

| sample | 8 | 9 | 10 | 11 | 12 | 13 | 14 |
|---|---|---|---|---|---|---|---|
| PPS1 | 60 | 59 | 58 | 40 | 37 | 0 | 0 |
| PPS2 | 0 | 0 | 0 | 0 | 0 | 58 | 58 |
| PPE-EP | 40 | 39 | 34 | 28 | 25 | 40 | 34 |
| IM | 0 | 0 | 6 | 0 | 6 | 0 | 6 |
| Glass fiber | 0 | 0 | 0 | 30 | 30 | 0 | 0 |
| PEI-SIL | 0 | 2 | 2 | 2 | 2 | 2 | 2 |
| HDT | 238 | 302 | 232 | 401 | 383 | 243 | 246 |
| NI | 0.22 | 0.21 | 0.38 | 1.02 | 1.06 | 0.22 | 0.47 |
| Flex. Mod. | 443.8 | 437.9 | 383.9 | 1515 | 1334 | 452.8 | 389.4 |
| Flex. Str. | 16.7 | 15.9 | 15.0 | 25.9 | 25.5 | 12.9 | 15.1 |
| Ten. Str. | 8.4 | 8.6 | 8.5 | 19.3 | 17.9 | 6.7 | 9.1 |
| Ten. elg. | 6.6 | 6.7 | 7.8 | 4.3 | 4.7 | 5.7 | 8.3 |
| Burn time | 3.3 | 1.3 | 2.7 | 5.1 | 18.3 | 4 | 2.7 |
| HDT in °F; NI in ft-lb/in; Flex. Mod. in Kpsi; Flex. Str. in Kpsi; Ten. Str. in Kpsi; Ten. Elg. in %; burn time in seconds. | | | | | | | |

**Table 3**

| sample | 15 | 16 | 17 | 18 | 19 | 20 | 21 |
|---|---|---|---|---|---|---|---|
| PPS1 | 90 | 89 | 84 | 61 | 59 | 0 | 0 |
| PPS2 | 0 | 0 | 0 | 0 | 0 | 90 | 89 |
| PPE-OP | 10 | 9 | 9 | 8 | 7 | 10 | 9 |
| IM | 0 | 0 | 5 | 0 | 3 | 0 | 0 |
| Glass fiber | 0 | 0 | 0 | 30 | 30 | 0 | 0 |
| PEI-SIL | 0 | 2 | 2 | 1 | 1 | 0 | 2 |
| HDT | 225 | 223 | 231 | 485 | 476 | 232 | 228 |
| NI | 0.22 | 0.21 | 0.47 | 0.97 | 1.06 | 0.21 | 0.18 |
| Flex. Mod. | 506 | 504 | 433 | 1573 | 1433 | 522 | 509 |
| Flex. Str. | 12.6 | 14.3 | 16.3 | 26.4 | 25.3 | 11.5 | 10.7 |
| Ten. Str. | 7.2 | 7.9 | 9.0 | 17.5 | 19.2 | 4.3 | 5.8 |
| Ten. elg. | 5.2 | 5.6 | 10.1 | 4 | 4.7 | 3.7 | 4.6 |
| burn time | burn | burn | burn | 1.3 | 2.4 | burn | 1.3 |
| HDT in °F; NI in ft-lb/in; Flex. Mod. in Kpsi; Flex. Str. in Kpsi; Ten. Str. in Kpsi; Ten. Elg. in %; burn time in seconds. | | | | | | | |

**Table 4**

| sample | 22 | 23 | 24 | 25 | 26 | 27 | 28 |
|---|---|---|---|---|---|---|---|
| PPS1 | 90 | 89 | 85 | 62 | 60 | 0 | 0 |
| PPS2 | 0 | 0 | 0 | 0 | 0 | 90 | 89 |
| PPE-EP | 10 | 9 | 8 | 7 | 6 | 10 | 9 |
| IM | 0 | 0 | 5 | 0 | 3 | 0 | 0 |
| Glass fiber | 0 | 0 | 0 | 30 | 30 | 0 | 0 |
| PEI-SIL | 0 | 2 | 2 | 1 | 1 | 0 | 2 |
| HDT | 226 | 222 | 223 | 485 | 483 | 208 | 219 |
| NI | 0.18 | 0.15 | 0.53 | 0.99 | 1.12 | 0.19 | 0.21 |
| Flex. Mod. | 511 | 499 | 442 | 1508 | 1458 | 506 | 494 |
| Flex. Str. | 13.0 | 15.0 | 16.7 | 27.8 | 27.1 | 14.6 | 15.3 |
| Ten. Str. | 6.5 | 6.4 | 9.8 | 19.0 | 20.1 | 7.4 | 7.3 |
| Ten. elg. | 4.8 | 6.4 | 13.3 | 4.5 | 6 | 6.6 | 5.4 |
| Burn time | burn | burn | burn | 1.5 | 2.4 | burn | burn |
| HDT in °F; NI in ft-lb/in; Flex. Mod. in Kpsi; Flex. Str. in Kpsi; Ten. Str. in Kpsi; Ten. Elg. in %; burn time in seconds. | | | | | | | |

**Table 5**

| sample | 29 | 30 | 31 |
|---|---|---|---|
| PPS1 | 55 | 53 | 53 |
| PPE-OE | 32.5 | 32.5 | 32.5 |
| IM | 5 | 5 | 5 |
| BF-E | 7.5 | 7.5 | 7.5 |
| PPE-SIL | 0 | 2 | 0 |
| PC-SIL | 0 | 0 | 2 |
| HDT | 254 | 251 | 257 |
| NI | 3.1 | 1.9 | 3.4 |
| Flex. Mod. | 328 | 310 | 318 |
| Flex. Str. | 12.8 | 12.1 | 12.6 |
| Ten. Str. | 7.5 | 7.5 | 7.4 |
| Ten. elg. | 39.4 | 21.8 | 43.9 |
| burn time | 10.6 | 4.2 | 7.6 |
| HDT in °F; NI in ft-lb/in; Flex. Mod. in Kpsi; Flex. Str. in Kpsi; Ten. Str. in Kpsi; Ten. Elg. in %; burn time in seconds. | | | |

**Table 6**

| sample | 32 | 33 | 34 |
|---|---|---|---|
| PPS1 | 55 | 53 | 53 |
| PPE-EP | 32.5 | 32.5 | 32.5 |
| IM | 5 | 5 | 5 |
| BF-E | 7.5 | 7.5 | 7.5 |
| PPE-SIL | 0 | 2 | 0 |
| PC-SIL | 0 | 0 | 2 |
| HDT | 240 | 254 | 235 |
| NI | 1.69 | 2.24 | 2.6 |
| Flex. Mod. | 361 | 330 | 322 |
| Flex. Str. | 12.4 | 13.2 | 12.8 |
| Ten. Str. | 8.2 | 7.9 | 7.8 |
| Ten. elg. | 15.7 | 22.1 | 19.9 |
| Burn time | 5.6 | 6.6 | 4.4 |
| HDT in °F; NI in ft-lb/in; Flex. Mod. in Kpsi; Flex. Str. in Kpsi; Ten. Str. in Kpsi; Ten. Elg. in %; burn time in seconds. | | | |

## Claims

1. A composition comprising:
(a) a compatibilizing poly(phenylene ether) resin;
(b) a poly(arylene sulfide) resin; and
(c) a siloxane copolymer resin.

2. The composition of Claim 1, wherein the compatibilizing poly(phenylene ether) resin is present at a level of from about 5% to about 95% by weight the poly(arylene sulfide) resin is present at a level of from about 5% to about 95% by weight; and the siloxane copolymer resin is present at a level of from about 0.1% to about 15% by weight all weights based on the total weight of the composition.

3. The composition of Claim 1, wherein the siloxane copolymer resin comprises compounds of the formula 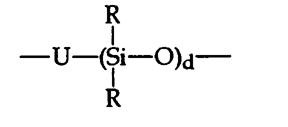 wherein U is a polymer selected from the group consisting of polyimides, polyetherimides, polycarbonates, poly(phenylene ethers), polyesters, copolyesters, polyamides, polyolefins, polyurethanes, and polyacrylates; R is a C₁-C₁₄ monovalent hydrocarbon radical, a substituted C₁-C₁₄ monovalent hydrocarbon radical, a C₆₋₂₀ aromatic radical, or a mixture of the foregoing, and d is an integer from 1 to about 200.

4. The composition of Claim 3, wherein the siloxane copolymer resin contains repeating units of the formula 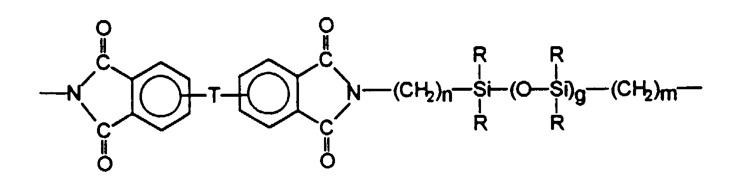 and of the formula 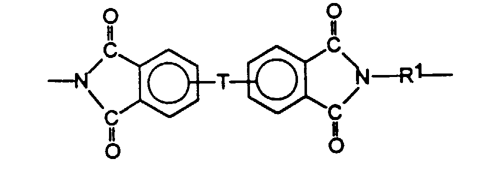 wherein T is - O - or a group of the formula -O-Z-O- wherein the divalent bonds of the -O- or the -O-Z-O- group are in the 3,3', 4,3', or the 4,4' positions; Z is a divalent radical selected from the group consisting of formulae 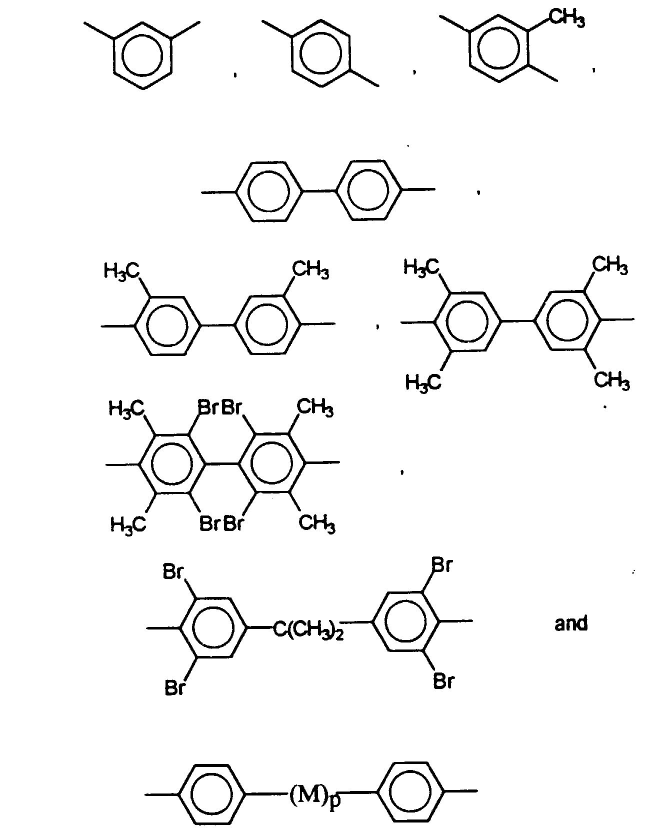 wherein M is a member selected from the group consisting of divalent radicals of formulae 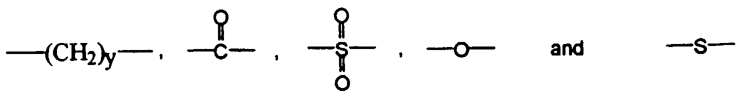 wherein y is an integer from 1 to about 5, and p is 0 or 1; n and m independently are integers from 1 to about 10; g is an integer from 1 to about 40; R is a C₁-C₁₄ monovalent hydrocarbon radical or a substituted C₁-C₁₄ monovalent hydrocarbon radical; and R¹ is a divalent organic radical selected from the group consisting of (a) aromatic hydrocarbon radicals having from 6 to about 20 carbon atoms and halogenated derivatives thereof, (b) alkylene radicals having from 2 to about 20 carbon atoms, (c) cycloalkylene radicals having from 3 to about 20 carbon atoms, and (d) divalent radicals of the general formula 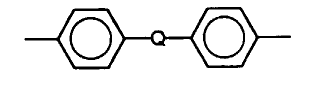 wherein Q is a member selected from the group consisting of formulae 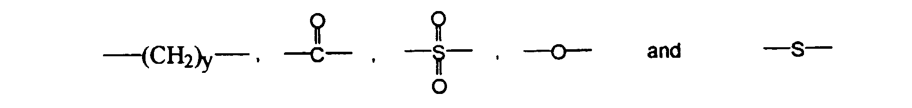 and y is an integer from 1 to about 5.

5. The composition of Claim 4, wherein each R is a methyl group, g is 10 and n and m are each 3.

6. The composition of Claim 1, wherein the compatibilizing poly(phenylene ether) resin comprises at least one reactive functional group of the group consisting of an epoxy and an ortho ester.

7. The composition if Claim 2, further comprising at least one reinforcing filler present at a level of from about 2% to about 50% by weight based on the total weight of the composition.

8. The composition of Claim 7, wherein the reinforcing filler is selected from the group consisting of glass fibers, carbon fibers, wollastonite, potassium titanate single crystal fibers, aluminum oxide fibers, glass beads, hollow glass beads, talcs, micas, chalks, quartzes, natural kaolins, calcined kaolins, and mixtures of the foregoing.

9. The composition according to Claim 2, further comprising an impact modifier present at a level of from about 2% to about 20% by weight based on the total weight of the composition.

10. The composition of Claim 9, wherein the impact modifier is selected from the group consisting of:
(i) block copolymers of alkenyl aromatic compounds and dienes;
(ii) epoxy functional α-olefin elastomers; and
(iii) a mixture of (i) and (ii).

11. The composition of Claim 10, wherein the block copolymer is a triblock copolymer.

12. The composition of Claim 11, wherein the block copolymer comprises polystyrene endblocks and a selectively hydrogenated diene-derived midblock.

13. The composition of Claim 1, further comprising at least one alkenyl aromatic polymer.

14. An article made from a composition comprising:
(a) a compatibilizing poly(phenylene ether) resin;
(b) a poly(arylene sulfide) resin; and
(c) a siloxane copolymer resin.

15. A method for making a composition comprising: intimately admixing a compatibilizing poly(phenylene ether) resin, a poly(arylene sulfide) resin, and a siloxane copolymer resin.

16. A composition consisting essentially of:
(a) a compatibilizing poly(phenylene ether) resin;
(b) a poly(arylene sulfide) resin; and
(c) a siloxane copolymer resin.

17. A composition consisting essentially of:
(a) a compatibilizing poly(phenylene ether) resin;
(b) a poly(arylene sulfide) resin;
(c) a siloxane copolymer resin; and
(d) at least one reinforcing filler.
